(19) Europäisches Patentamt
European Patent Office
Office européen des brevets

(11) EP 1 790 516 B1

(12) EUROPEAN PATENT SPECIFICATION

(45) Date of publication and mention of the grant of the patent:
22.03.2017 Bulletin 2017/12

(51) Int Cl.:
B60K 15/03 (2006.01)     B60K 15/067 (2006.01)
B60K 15/077 (2006.01)     B60K 15/063 (2006.01)

(21) Application number: 05774691.9

(22) Date of filing: 26.08.2005

(86) International application number:
PCT/JP2005/015552

(87) International publication number:
WO 2006/022376 (02.03.2006 Gazette 2006/09)

(54) **FUEL TANK**

KRAFTSTOFFBEHÄLTER

RESERVOIR POUR COMBUSTIBLE

(84) Designated Contracting States:
DE PT

(30) Priority: 26.08.2004 JP 2004246307

(43) Date of publication of application:
30.05.2007 Bulletin 2007/22

(73) Proprietors:
• **Mitsubishi Fuso Truck and Bus Corporation**
**Kanagawa 212-0058 (JP)**
• **Hoei Industries, Ltd.**
**Tokyo 1440051 (JP)**

(72) Inventors:
• **ANDO, Takao,**
**Mitsubish Fuso Truck & Bus Corp.**
**Kawasaki-shi, Kanagawa 2120058 (JP)**
• **HAYASHIDA, Tatsuaki,**
**Mitsubishi Fuso Truck & Bus**
**Kawasaki-shi, Kanagawa 2120058 (JP)**

• **ONO, Yoshinao,**
**Mitsubishi Fuso Truck & Bus Corp.**
**Kawasaki-shi, Kanagawa 2120058 (JP)**
• **KUROKI, Shinichiro,**
**HOEI INDUSTRIES, LTD.**
**Moka-shi, Tochigi 3214346 (JP)**
• **KITANO, Seiji,**
**HOEI INDUSTRIES, LTD.**
**Moka-shi, Tochigi 3214346 (JP)**
• **IMAMURA, Hideki,**
**HOEI INDUSTRIES, LTD.**
**Moka-shi, Tochigi 3214346 (JP)**

(74) Representative: **advotec.**
**Patent- und Rechtsanwälte**
**Widenmayerstrasse 4**
**80538 München (DE)**

(56) References cited:
JP-A- 10 216 849     JP-A- H09 263 147
JP-A- 2002 127 765     JP-A- 2004 123 052
JP-A- 2004 123 052     JP-Y2- 2 525 194

EP 1 790 516 B1

## Description

### TECHNICAL FIELD

The present invention relates to a fuel tank, which is mounted on a side frame through a bracket, enable to enhance the rigidity thereof, to make the vibration frequency thereof higher than an unsprung vibration frequency, and to increase the durability thereof.

### BACKGROUND ART

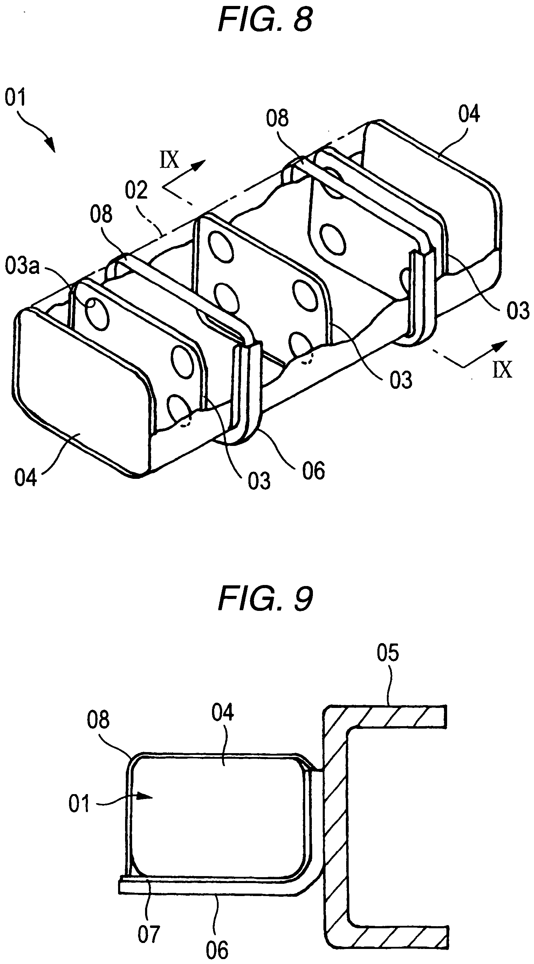

As shown in FIG. 8, a fuel tank 01 for a truck is configured so that separators 03 each having a through hole 03a provided to stabilize the flow of a fuel are fixed to the inside of a cross-sectionally substantially-rectangular-shaped cylindrical portion 02 by spot-welding. The internal space of the cylindrical portion 02 is partitioned into a plurality of chambers. Also, end plates 04 are attached to both opening end parts of the cylindrical portion 02 by seam-welding. As shown in FIG. 9, the fuel tank 01, which is a conventional apparatus manufactured in this manner, is mounted by winding a belt 08 around a cross-sectionally hat-shaped bracket 06 that has an L-shape appearance and that is attached to an outer surface of a side frame 05 of a truck by bolt-tightening.

That is, a rubber (a frictional contact member) 07 is laid on the bracket 06 by being stuck thereonto. The fuel tank 01 is mounted on the rubber. When the belt 08 is wound around the fuel tank 01 in this state, similarly, a rubber (not shown) is laid on the belt 08 that is then wound therearound through the rubber. Consequently, the fuel tank 01 is fixed to the bracket 06. At that time, the belt 08 is wound around the bracket 06 placed at a position that is offset from the separator 03. That is, only the cylindrical portion 02 is tighten with the belt 08. Thus, the cylindrical portion 02, which receives a force from the belt 08, is brought into an out-of-plane stress state. Before a required tensile force is generated in the belt 08, the deformation of a cross-section of the fuel tank proceeds, so that an appropriate tensile force is not obtained. Consequently, the rigidity of the fuel tank 01, which is the conventional apparatus, becomes very low, so that a sufficient initial tensile force cannot be given to the belt 08.

Thus, a method of using a structure, in which the separator 03 is disposed just under the belt, is employed as a method of giving the initial force to the belt. As examples of such an art, arts described in Patent Document 1 and Patent Document 2, which shows a fuel tank according to the preamble of claim 1, are known. The structures according to the arts described in these patent documents have substantially the same structure as the basic form of the fuel tank 01 which is the conventional apparatus. However, the structures according to the arts described in these patent documents differ therefrom in that the separator of the fuel tank is disposed just under the belt and is fixed to the bracket. Consequently, the tanks described in the patent documents enhance the rigidity of the separator against the force received from the belt.

Patent Document 1 JP-A-2002-160539
Patent Document 2 JP-A-2004-123052

### DISCLOSURE OF THE INVENTION

### PROBLEMS THAT THE INVENTION IS TO SOLVE

However, the separators described in the patent documents increases the rigidity thereof merely by forming reinforcing beads. Therefore, no beads are provided in a direction along a diagonal line extending from an upper corner portion of the fuel tank, which portion abuts against a middle portion of the belt wound around the fuel tank. Thus, there is a given limitation to the enhancement of the rigidity of the fuel tank against a tightening force that acts upon the fuel tank from the upper corner portion when the fuel tank is tighten with the belt. Consequently, it becomes difficult to enhance the rigidity of the fuel tank against a belt-tightening force. In the vibration behavior of the fuel tank involving the mass of fuel, the vibration frequency (the characteristic frequency) of the fuel tank becomes closer to the unsprung vibration frequency of a truck. Thus, the entire fuel tank becomes easy to vibrate. Hence, the conventional apparatuses have problems in that the input of vibrations to a weld joint portion of the separator causes the peeling of a welded portion, and that the plastic deformation of the separator itself causes the damage of the tank.

The invention is devised to solve such problems, and aims at providing a fuel tank enabled to enhance the rigidity thereof, to make the vibration frequency thereof higher than an unsprung vibration frequency, and to increase the durability thereof.

### MEANS FOR SOLVING THE PROBLEMS

The invention achieves such an object, and provides a fuel tank as defined in claim 1.

According to an embodiment, the fuel tank is formed so that a sum of a radius of an inner surface of the tank body at the lower corner portion of the separator and a board thickness of the tank body is substantially equal to or is less than a radius of the corner portion of the bracket.

According to an embodiment, the separator, in which main beads are respectively provided on both of the diagonal lines, is curved to have a predetermined radius.

According to an embodiment, a main bead, which intersects with the main bead and is continuous to the flange of the separator, is provided as a frame along the other diagonal line of the separator.

According to an embodiment, a sub-bead, which is discontinuous to the main bead and to the flange of the separator, is provided along the other diagonal line of the separator.

According to an embodiment, the fuel tank body is mounted on a frictional contact member laid on the substantially L-shaped bracket.

According to an embodiment, a sum of a radius of an inner surface of the tank body at the lower corner portion of the separator, a board thickness of the tank body and a thickness of the frictional contact member is substantially equal to or is less than a radius of the corner portion of said bracket.

ADVANTAGES OF THE INVENTION

The separators of the fuel tank body are disposed just under the belt member. A main bead serving as a frame of each of the separators is provided therein to extend in a direction of a diagonal line from an upper corner portion serving as an input portion, from which a tensile force of the belt member is inputted, to a lower corner portion thereof at a corner portion of the bracket. Thus, the rigidity of the separator itself is enhanced.

Another main bead, which intersects with the former main bead and is continuous to the flange thereof, is provided as a frame along the other diagonal line of each of the separators. Thus, the structure of each of the separators can be made to have a symmetrical shape.

BRIEF DESCRIPTION OF THE DRAWINGS

[FIG. 1] FIG. 1 is an external broken perspective view illustrating a fuel tank according to a first embodiment of the invention.
[FIG. 2] FIG. 2 is an enlarged external perspective view illustrating a separator used in the fuel tank according to the first embodiment of the invention.
[FIG. 3] FIG. 3 is a cross-sectional view, taken along line III-III shown in FIG. 1, which illustrates a structure attached to a side frame.
[FIG. 4] FIG. 4 is an enlarged view illustrating a primary part of a portion C shown in FIG. 3.
[FIG. 5] FIG. 5 is a graph illustrating the relation between a belt-generated tensile force and a tensile quantity of belt in the first embodiment.
[FIG. 6(a)] FIG. 6(a) is an external perspective view illustrating a separator according to a second embodiment of the invention.
[FIG. 6(b)] FIG. 6(b) is a cross-sectional view illustrating a modification of the second embodiment, which is taken along line VIB-VIB shown in FIG. 6(a).
[FIG. 7] FIG. 7 is a graph illustrating the relation between the belt-generated tensile force and the tensile quantity of belt in the second embodiment.
[FIG. 8] FIG. 8 is an external perspective view illustrating a conventional fuel tank.
[FIG. 9] FIG. 9 is a cross-sectional view taken along IX-IX shown in FIG. 8.

DESCRIPTION OF REFERENCE NUMERALS AND SIGNS

1 fuel tank (fuel tank body), 2 cylindrical portion, 3 separator, 3a through hole, 3b flange, 3c upper corner portion, 3d lower corner portion, 3e main bead, 3f curved surface, 3g, 3h sub-beads, 4 end plate, 5 side frame, 6 bracket, 6a corner portion, 7 rubber (frictional contact member), 8 belt (belt member), 30 separator, 30a through hole, 30b flange, 30c upper corner portion, 30d lower corner portion, 30e main bead, 30f curved surface, 30j main bead, 300 curved surface, G distance

BEST MODE FOR CARRYING OUT THE INVENTION

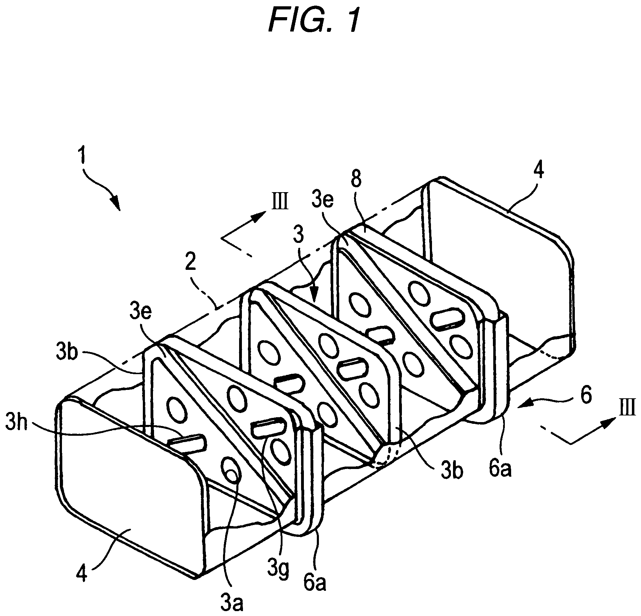

Hereinafter, an embodiment of the invention is described with reference to FIGS. 1 to 4. A fuel tank 1 according to this embodiment is made of a metallic material, for example, copper, stainless copper, or an aluminum alloy. As shown in FIG. 1, the basic form of the fuel tank is configured so that a fuel tank body 10 having an internal space, in which fuel can be stored, includes a cross-sectionally substantially-rectangular-shaped cylindrical portion 2, three separators 3 disposed in the cylindrical portion 2 at intervals, and end plates 4 that block up both end opening parts of the cylindrical portion 2. Incidentally, the number of the separators 3 is not limited to three. The fuel tank 1 is mounted on a truck by laying rubber 7, which is a frictional contact member, on an L-shaped bracket 6 attached to a side frame of the truck, and subsequently putting the fuel tank 1 on the rubber 7 and then tightening the fuel tank 1 with a belt 8 to thereby fix the fuel tank 1.

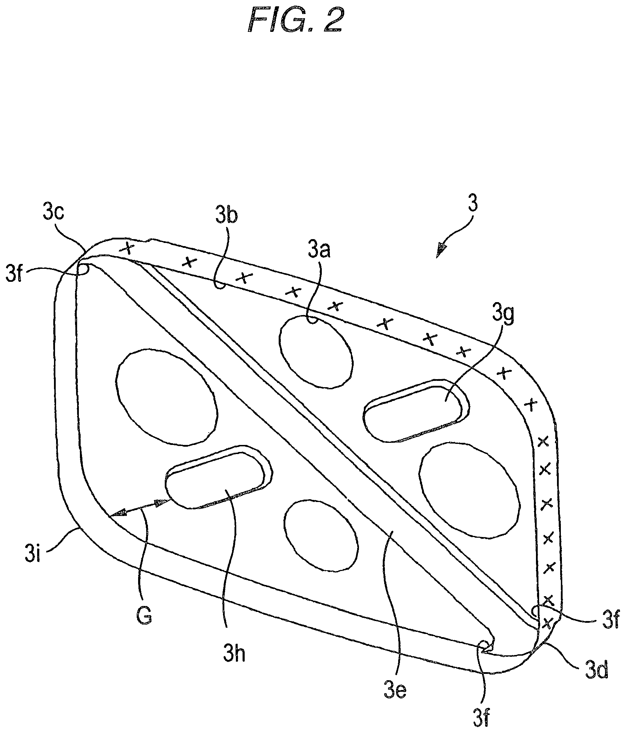

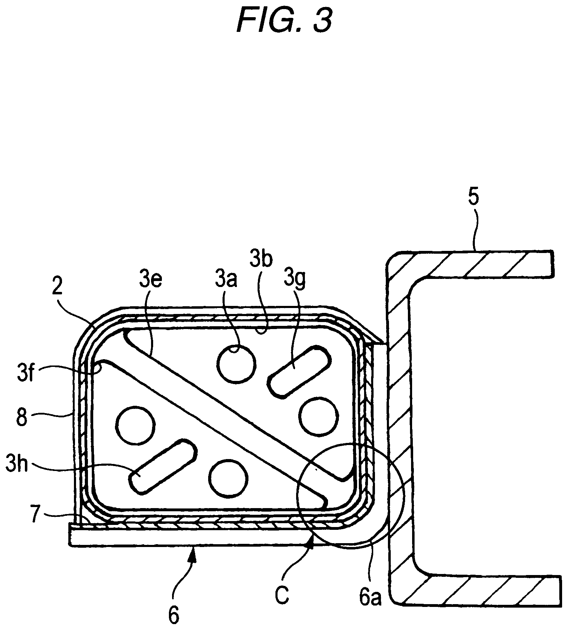

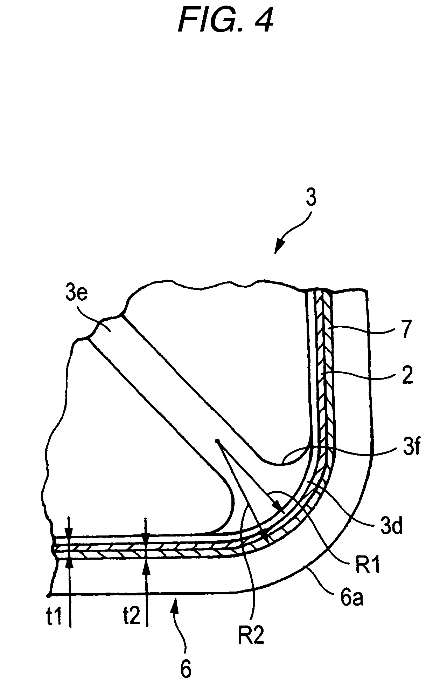

Hereinafter, the separator (hereunder sometimes referred to as a "separator according to a first pattern") 3 is more specifically described. The separator 3 is formed to have a substantially rectangular-shaped periphery, as shown in FIG 2, to be accommodated in the cylindrical portion 2. Through holes 3a used to stabilize the flow of a fuel are provided at four places, that is, upper, lower, left and right positions. Also, a flange 3b is formed on the entire circumference of the separator 3. A curved surface having a radius R1 is formed at a lower corner portion 3d located diagonally from an upper corner portion 3c of the separator 3 serving as an input portion, from which a tensile force due to the belt portion 8 is inputted, to be opposed to the upper corner portion 3c. A main bead 3e serving as a frame of the separator 3 is provided to extend in the direction of a diagonal line connecting the upper corner portion 3c to the lower corner portion 3d. Both side edges at both ends of the main bead 3e are smoothly connected to the flange 3b through circular-arc-like curved surfaces 3f each having a predetermined radius, respectively. Additionally, the lower corner portion 3d is set to face the corner portion 6a having a radius R2 of the bracket 6 (see FIGS. 3 and 4).

Incidentally, the radius R2 of the corner portion 6a of the bracket 6, the radius R1 of the lower corner portion 3d of the separator 3, the board thickness t1 of a tank cylindrical portion, and the thickness t2 of the rubber 7 are set at dimensions that satisfy the following equation 1.

## (Equation 1)

$$R1+t1+t2 \leq R2$$

Thus, as shown in FIG. 4, the lower corner portion 3d of the separator 4, the rubber 7, and the corner portion 6a of the bracket 6 in the fuel tank 1 are attached to one another by setting the dimensions, which satisfy the aforementioned equation, so that there are no spaces thereamong. Consequently, when the belt member 8 is wound around the fuel tank body 10, the tightening force due to the belt member 8 is surely applied. Consequently, a pressure-attachment force used to pressure-attach the fuel tank body 10 to the bracket 6 is enhanced. The fuel tank body 10, the rubber 7, and the bracket 6 are integrally connected to one another. A stress due to a belt tightening force transmitted from the belt member 8 to the main bead 3e of the separator 3 can effectively be dispersed. Consequently, the fuel tank can favorably be prevented from being damaged.

On the other hand, two sub-beads 3g and 3h are provided to extend along the other diagonal line of the separator 3, which intersects with the main bead 3a, and to be discontinuous to the main bead 3e and the flange 3b of the separator 3. All recesses in the main bead 3e and the sub-beads 3g and 3h smoothly connect the flange 3b and the main bead 3e and are formed in a direction in which the flange 3b is folded by press-working so as to enhance the rigidity of the separator. Preferably, at that time, as shown in FIG. 2, the distance between the sub-bead 3h and the outside lower corner portion 3i is set to be the distance G that is substantially equal to the radius R1 (see FIG. 2).

Two kinds of separators 3 are manufactured in consideration of workability thereof to facilitate the accommodation thereof in the cylindrical portion 2 and the insertion of a spot welding gun. That is, first and second separators 3 placed from the front side (or lower side), as viewed in FIG. 1, are pressed by using a press die, which is different from a press die used to press a first separator placed from the rear side (or upper side), as viewed in this figure, so that at least the orientation of the flange 3b of each of the first and second separators 3 placed from the front side differs from the orientation of the flange 3b of the first separator 3 placed from the rear side.

Next, the manufacturing of the fuel tank body 10 is described below. First, in a case where the separators 3 are attached thereto by being accommodated in the cylindrical portion 2, the first and second separators 3 placed from the front side, as viewed in FIG. 1, are accommodated from a bottom opening part by being directed in the same direction. Then, the flanges 3b are fixed to the inner circumferential surface of the cylindrical portion 2 by being sequentially welded through the use of the welding means, such as spot-welding, to places indicated with crosses. A third separator 3 (the first separator 3 placed from the upper side) is accommodated from a top opening part. Then, similarly, the third separator 3 is spot-welded thereto.

The pressed end plates 4 are welded to both the end opening parts of the cylindrical portion 2, to which the three separators 3 are welded at predetermined intervals, by, for instance, seam-welding, so that the end opening parts are blocked up. Each of the end plates 4 is configured so that a flange is formed on the entirety of the outer periphery thereof, and that a curved surface part is formed on a planar part surrounded by the flange to spherically expand toward the outside of the fuel tank 1. The provision of such a curved surface part causes a force to flow into the surface of each of the end plates 4 so that a part of a vertical load component imposed onto the curved surface part is set as a force component. Consequently, the rigidity of each of the end plates 4 is enhanced. The vibration characteristics are improved.

Thus, four fuel storage chambers communicating with one another through the through holes 3a of the three separators 3 are formed in the manufactured fuel tank body 10.

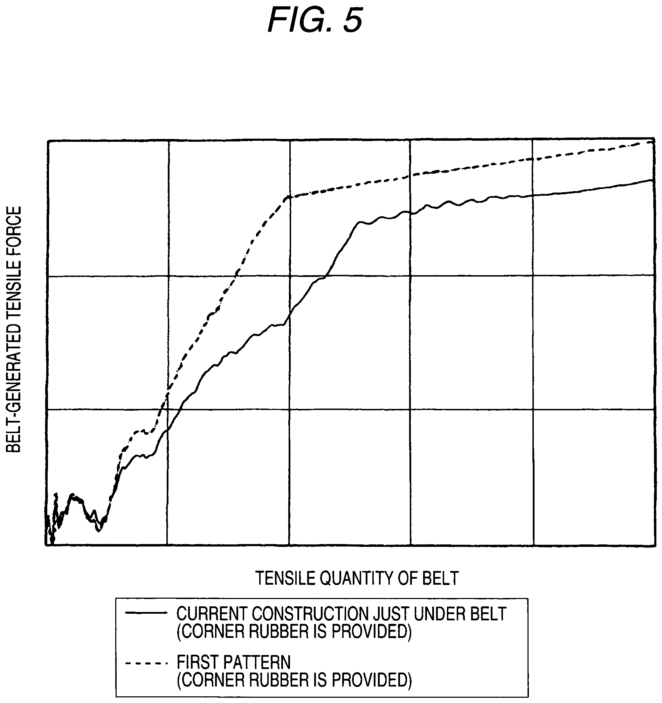

Next, the mounting structure of the fuel tank 1 is described below. That is, for example, as shown in FIGS. 1 and 5, two cross-sectionally hat-shaped brackets 6, which are L-shaped, are fasten to the outer surface of the side frame 5 of the truck at two places with bolts (not shown). Also, even in the corner portion 6a of the bracket 6, the rubber is seamlessly provided as a corner rubber. The fuel tank body 10 is put on the rubber. At that time, among the three separators 3, the two separators 3 are disposed just above the brackets 6 respectively provided at two places. The fuel tank 1 is fasten to the brackets 6 by connecting both ends of the belt 8 to each of the brackets 6 so that the relation represented by the equation 1 is satisfied and that each of the separators 3 is disposed just under the belt 8.

Incidentally, FIG. 5 shows a graph illustrating a result of an experiment conducted by the applicant of the present application. This graph illustrates a result of comparison concerning the relation between the belt-generated tensile force and the tensile quality of the belt, which comparison is made between the fuel tank 1, which includes the separators 3, that is, the separators according to the first pattern, and a fuel tank including separators of the type that has no main beads. This result shows that even in a case where the fuel tank is configured so that the separators are disposed just under the belt, the fuel tank 1, whose separators are provided according to the first pattern, that is, whose separators are those of the aforementioned embodiment, is larger in the belt-generated tensile force than and is advantageous over the fuel tank, whose separators are ordinal ones that do not have the main beads 3e.

As described above, according to this embodiment, the main bead 3b is provided in the separator 3. Thus, the rigidity of each of the separators 3 is enhanced. The vibration characteristics are improved. Also, the separators 3, whose rigidity is enhanced, are disposed just under the belt. Thus, a required belt tensile force can be obtained. Also, the main bead 3b is disposed in consideration of the flow of the force in each of the separators 3 at the belt-fastening. Consequently, the strength of the separator itself can be secured. Further, the fuel tank 1 can be brackets 6 at the corner portions 6a thereof in a state in which the dimension relation expressed by the equation 1 is satisfied, that is, in which the fuel tank and the brackets are put into completely intimate contact with each other through the rubber 7 without space between the fuel tank and each of the brackets.

Also, as shown in FIG. 2, a discontinuous part, in which no beads are provided, is formed between the outer end of the sub-bead 3h and the outside lower corner portion 3i. Thus, this embodiment is advantageous in that stress concentration is suppressed, and in that the flexibility of the separator 3 against deformation can be enhanced.

In other words, according to the fuel tank according to this embodiment, the fastening rigidity, at which the fuel tank is fastened thereto with the belts, is extremely enhanced, and that the vibration frequency (the characteristic frequency) of the fuel tank is higher than the unsprung vibration frequency. Thus, occurrences of troubles, such as the damage caused by inputting vibrations to the weld joint bracket of the separator, can be prevented. The fuel tank 1 can surely be fastened. Occurrence of the plastic deformation of the separator 3 itself can be prevented at the fastening thereof with the belts. Consequently, stability in attaching the fuel tank 1 to the brackets 6 can considerably be enhanced. Also, the number of usable and durable years can be increased.

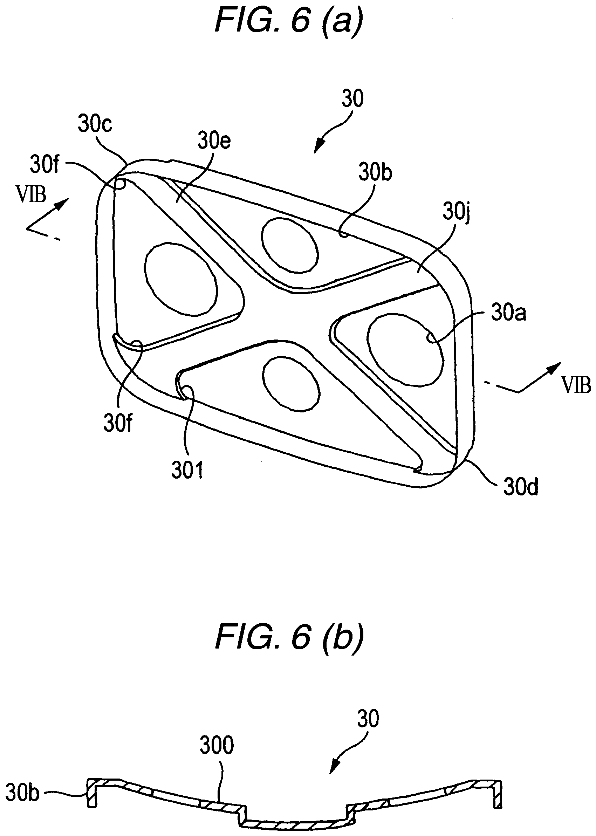

Next, the configuration of a second embodiment is described below with reference to FIG. 6(a). That is, the basic form of a separator (hereunder referred to as a "separator according to a second pattern") 30 is the same as that of the separator 3 of the first embodiment. The second embodiment differs from the first embodiment in that a main bead 30j, which intersects with the main bead 30e and serves as another frame, is provided along the other diagonal line of the separator, in addition to the main bead 30e extending along a diagonal line connecting an upper corner portion 30c to a lower corner portion 30d. The rest of the configuration of the second embodiment is similar to that of the first embodiment, that is, the configuration of the second embodiment is similar to that of the first embodiment in that both side edges of each of both end portions of the main beads 30e and 30j are smoothly continuous to a flange 30b through curved surfaces 30f each having a predetermined radius, and that through holes 30a are provided in the separator 30.

The separator 30 of the second embodiment is incorporated and is welded to the cylindrical portion 2, similarly to that of the first embodiment. The fuel tank 1 manufactured in this way is mounted on a vehicle by being attached to a bracket 6 through components of the embodiment in a manner in which each of the separators 30 is disposed just under the belt.

According to the fuel tank 1 of this second embodiment, the frame is ended at a central portion at which the two main beads 30e and 30j intersect with each other. Thus, the rigidity of the separator 30 is lowered, as compared with that of the separator of the first embodiment. However, the vibration characteristics of the separator 30 can be improved. The strength of the separator itself can be ensured at the belt-fastening. Also, the belt-tightening force can be enhanced. Additionally, the spot-welding of the separator can be performed by accommodating the separator from any opening end of the cylindrical portion 2 without taking the orientation thereof into consideration. Consequently, the commoditizing of separator components can be achieved. The manufacturing cost of the fuel tank can be reduced.

In the second embodiment, the two main beads 30e and 30j intersect with each other at the central portion of the separator 30. Thus, the second embodiment has a non-curved configuration in which the frame serving as a force transmission path is ended. However, this embodiment can be changed to a curved type modification, in which a part corresponding to the planar part of the separator 30 is formed as a curved surface 300 having a predetermined radius, as shown in FIG. 6(b). According to this modification, the rigidity of the separator 30 can be prevented from being lowered.

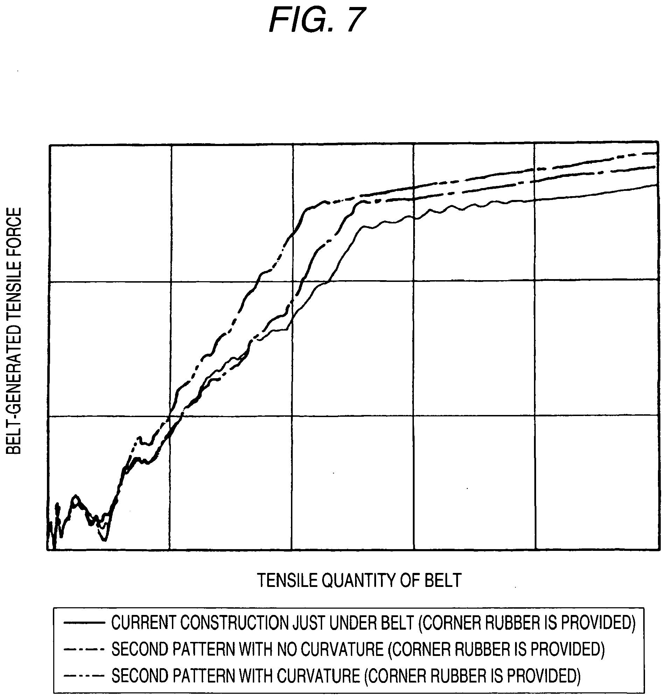

FIG. 7 is a graph illustrating a result of comparison concerning the relation between the belt-generated tensile force and the tensile quality of the belt, which comparison is made between the second embodiment (corresponding to the separator of the non-curved type according to the second pattern) and the modification (corresponding to the separator of the curved type according to the second pattern). As is apparent from FIG. 7, the modification of the second embodiment, that is, the modification, in which a part corresponding to the planar part of the separator 30 is formed as a curved surface 300 having a predetermined radius, is higher than the second embodiment in the belt-generated tensile force.

Also, the relation between the structure of the separator and the primary characteristic value (the primary characteristic frequency) was studied by computer numerical analysis. A result of the analysis reveals that the (conventional) fuel tank having the ordinary planar separator, which does not have the main beads 30e and 30j, the fuel tank (according to the second embodiment) having the non-curved type separator according to the second pattern, and the fuel tank (according to the modification of the second embodiment) having the curved type separator are cited in the ascending order of the primary characteristic value (the primary characteristic frequency). The characteristic value of this modification is significantly large, as compared with that of the fuel tank 1 having the separator 3 according to the first embodiment.

According to the result, the fuel tank in accordance with the modification of the second embodiment is larger in the characteristic value than the fuel tank of the second embodiment and the fuel tank of the first embodiment. Therefore, the fuel tank according to the modification of the second embodiment excels in the vibration characteristic of the separator itself, the enhancement of the rigidity, and the increase in the tensile force of the belt.

In the foregoing description, the first and second embodiments of the invention and the modifications thereof have been described in detail with reference to the accompanying drawings. However, the practical constitution of the invention is not limited thereto.

INDUSTRIAL APPLICABILITY

The fuel tank according to the invention can be utilized as a vehicular fuel tank that is high in rigidity and that has excellent durability.

## Claims

1. A fuel tank (1) in which a fuel tank body is configured so that a flange (3b, 30b) of an outer periphery of each separator (3, 30) is welded to an inner surface of a cross-sectionally substantially rectangular shaped cylindrical portion (2) and an end plate (4) is fixed to each of both opening end parts of the cylindrical portion (2), and the fuel tank body is mounted on a substantially L-shaped bracket (6) attached to a side frame (5) and is fixed to the bracket (6) by winding a belt member (8) therearound, wherein the separator (3, 30) is disposed just under the belt member (8), and a main bead (3e, 30e) serving as a frame of the separator (3,30) is provided in the separator (3, 30), **characterized in that** the main bead (3e, 30e) extends in a direction of a diagonal line from an upper comer portion (3c, 30c) of the separator (3, 30) which is an input portion from which a tensile force of the belt member (8) is inputted, to a lower comer portion (3d, 30d) of the separator (3, 30) at a corner portion (6a) of the bracket (6), wherein both side edges of both ends of the main bead (3e, 30e) are connected to the flange (3b, 30b) through a curved surface (3f, 30f) having a predetermined radius.

2. The fuel tank (1) according to claim 1, wherein a sum of a radius of an inner surface of the tank body at the lower corner portion (3d, 30d) of the separator (3, 30) and a board thickness of the tank body is substantially equal to or is less than a radius of the corner portion of the bracket (6).

3. The fuel tank (1) according to claim 1, wherein a surface of the separator (30), in which main beads (30e, 30j) are respectively provided on both of the diagonal lines, is formed as a surface (300) spherically curved in a direction orthogonal thereto.

4. The fuel tank (1) according to claim 1, wherein another main bead (30j), which intersects with the former main bead (30e) and is continuous to the flange (30b) of the separator (30), is provided as a frame along the other diagonal line of the separator (30).

5. The fuel tank (1) according to claim 1, wherein a sub-bead (3h), which is discontinuous to the main bead (3e) and to the flange (3b) of the separator (3), is provided along the other diagonal line of the separator (3).

6. The fuel tank (1) according to claim 1, wherein the fuel tank body is mounted on a friction contact member (7) laid on the substantially L-shaped bracket (6).

7. The fuel tank (1) according to claim 6, wherein a sum of a radius of an inner surface of the tank body at the lower corner portion (3d, 30d) of the separator (3, 30), a board thickness of the tank body and a thickness of the frictional contact member (7) is substantially equal to or is less than a radius of the corner portion of said bracket (6).

## Patentansprüche

1. Kraftstofftank (1), bei welchem ein Kraftstofftankkörper derart ausgebildet ist, dass ein Flansch (3b, 30b) eines Außenumfangs einer jeden Trenneinrichtung (3, 30) an eine Innenfläche eines im Querschnitt im Wesentlichen rechteckig ausgebildeten zylindrischen Abschnitts (2) angeschweißt ist und eine Endplatte (4) jeweils an beiden Öffnungsendteilen des zylindrischen Abschnitts (2) fixiert ist und der Kraftstofftankkörper an einem im Wesentlichen L-förmigen Winkel (6) gelagert ist, welcher an einem Seitenrahmen (5) befestigt und durch Umwicklung mit einem Riemenelement (8) an dem Winkel (6) fixiert ist, wobei die Trenneinrichtung (3, 30) direkt unter dem Riemenelement (8) angeordnet ist, und eine als Rahmen der Trenneinrichtung (3, 30) dienende Hauptverstärkungsrippe (3e, 30e) in der Trenneinrichtung (3, 30) vorgesehen ist, **dadurch gekennzeichnet, dass** die Hauptverstärkungsrippe (3e, 30e) in einer Richtung einer diagonalen Linie von einem einen Einleitabschnitt bildenden oberen Eckabschnitt (3c, 30c) der Trenneinrichtung (3, 30), ausgehend von welchem eine Zugkraft des Riemenelements (8) einleitbar ist, zu einem unteren Eckabschnitt (3d, 30d) der Trenneinrichtung (3, 30) an einem Eckabschnitt (6a) des Winkels (6) verläuft, wobei beide Seitenränder beider Enden der Hauptverstärkungsrippe (3e, 30e) über eine mit einem vorbestimmten Radius gekrümmte Fläche (3f, 30f) mit dem Flansch (3b, 30b) verbunden sind.

2. Kraftstofftank (1) nach Anspruch 1, wobei eine Summe eines Radius einer Innenfläche des Tankkörpers an dem unteren Eckabschnitt (3d, 30d) der Trenneinrichtung (3, 30) und einer Wanddicke des Tankkörpers im Wesentlichen gleich einem oder kleiner als ein Radius des Eckabschnitts des Winkels (6) ist.

3. Kraftstofftank (1) nach Anspruch 1, wobei eine Fläche der Trenneinrichtung (30), in welcher Hauptverstärkungsrippen (30e, 30j) jeweils an beiden diagonalen Linien vorgesehen sind, als eine in orthogonaler Richtung dazu kugelförmig gekrümmte Fläche (300) ausgebildet ist.

4. Kraftstofftank (1) nach Anspruch 1, wobei eine die vorige Hauptverstärkungsrippe (30e) schneidende und an den Flansch (30b) der Trenneinrichtung (30) anschließende weitere Hauptverstärkungsrippe (30j) als Rahmen entlang der anderen diagonalen Linie der Trenneinrichtung (30) vorgesehen ist.

5. Kraftstofftank (1) nach Anspruch 1, wobei eine von der Hauptverstärkungsrippe (3e) und dem Flansch (3b) der Trenneinrichtung (3) getrennte Nebenverstärkungsrippe (3h) entlang der anderen diagonalen Linie der Trenneinrichtung (3) vorgesehen ist.

6. Kraftstofftank (1) nach Anspruch 1, wobei der Kraftstofftankkörper an einem an dem im Wesentlichen L-formigen Winkel (6) angelegten Reibkontaktelement (7) gelagert ist.

7. Kraftstofftank (1) nach Anspruch 6, wobei eine Summe eines Radius einer Innenfläche des Tankkörpers an dem unteren Eckabschnitt (3d, 30d) der Trenneinrichtung (3, 30), einer Wanddicke des Tankkörpers und einer Dicke des Reibkontaktelements (7) im Wesentlichen gleich einem oder weniger als ein Radius des Eckabschnitts des Winkels (6) ist.

**Revendications**

1. Réservoir de carburant (1) dans lequel un corps de réservoir de carburant est configuré de telle manière qu'une bride (3b, 30b) d'une périphérie extérieure de chaque séparateur (3, 30) est soudée à une surface intérieure d'une partie cylindrique (2) ayant une section transversale essentiellement rectangulaire et une plaque terminale (4) est fixée à chacune des deux parties terminales d'ouverture de la partie cylindrique (2), et le corps de réservoir de carburant est monté sur un support (6) essentiellement en forme de L attaché à un cadre latéral (5) et est fixé au support (6) en enroulant un élément de courroie (8) atour de celui-ci, dans lequel le séparateur (3, 30) est disposé juste sous l'élément de courroie (8), et une nervure principale (3e, 30e) servant de cadre du séparateur (3, 30) est prévue dans le séparateur (3, 30), **caractérisé en ce que** la nervure principale (3e, 30e) s'étend dans la direction d'une ligne diagonale d'une partie de coin (3c, 30c) supérieure du séparateur (3, 30), qui est une partie d'entrée à partir de laquelle une force de tension du l'élément de courroie (8) est entrée, vers une partie de coin (3d, 30d) inférieure du séparateur (3, 30) à une partie de coin (6a) du support (6), dans lequel les deux bords latéraux des deux extrémités de la nervure principale (3e, 30e) sont reliés avec la bride (3b, 30b) par une surface courbée (3f, 30f) ayant un rayon prédéterminé.

2. Réservoir de carburant (1) selon la revendication 1, dans lequel une somme d'un rayon d'une surface intérieure du corps de réservoir à la partie de coin (3d, 30d) inférieure du séparateur (3, 30) et d'une épaisseur de panneau du corps de réservoir est essentiellement égale ou inférieure à un rayon de la partie de coin du support (6).

3. Réservoir de carburant (1) selon la revendication 1, dans lequel une surface du séparateur (30), dans laquelle des nervures principales (30e, 30j) sont prévues respectivement sur les deux lignes diagonales, est formée comme surface (300) courbée de manière sphérique dans une direction orthogonale à celui-ci.

4. Réservoir de carburant (1) selon la revendication 1, dans lequel une autre nervure principale (30j), qui croise la nervure principale (30e) précédente et se rattache à la bride (30b) du séparateur (30), est prévue comme cadre le long de l'autre ligne diagonale du séparateur (30).

5. Réservoir de carburant (1) selon la revendication 1, dans lequel une sous-nervure (3h), qui ne se rattache pas à la nervure principale (3e) et à la bride (3b) du séparateur (3), est prévue le long de l'autre ligne diagonale du séparateur (3).

6. Réservoir de carburant (1) selon la revendication 1, dans lequel le corps de réservoir de carburant est monté sur un élément de contact par frottement (7) mis sur le support (6) essentiellement en forme de L.

**7.** Réservoir de carburant (1) selon la revendication 6, dans lequel une somme d'un rayon d'une surface intérieure du corps de réservoir à la partie de coin (3d, 30d) inférieure du séparateur (3, 30), d'une épaisseur de panneau du corps de réservoir est d'une épaisseur de l'élément de contact par frottement (7) est essentiellement égale ou inférieure à un rayon de la partie de coin dudit support (6).

## FIG. 1

# FIG. 2

# FIG. 3

# FIG. 4

# FIG. 5

BELT-GENERATED TENSILE FORCE

TENSILE QUANTITY OF BELT

—— CURRENT CONSTRUCTION JUST UNDER BELT
(CORNER RUBBER IS PROVIDED)

----- FIRST PATTERN
(CORNER RUBBER IS PROVIDED)

# FIG. 6 (a)

# FIG. 6 (b)

# FIG. 7

BELT-GENERATED TENSILE FORCE

TENSILE QUANTITY OF BELT

——— CURRENT CONSTRUCTION JUST UNDER BELT (CORNER RUBBER IS PROVIDED)
—·—· SECOND PATTERN WITH NO CURVATURE (CORNER RUBBER IS PROVIDED)
——— SECOND PATTERN WITH CURVATURE (CORNER RUBBER IS PROVIDED)

# FIG. 8

# FIG. 9

**EP 1 790 516 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002160539 A

- JP 2004123052 A